# EUROPÄISCHE PATENTSCHRIFT

(11) **EP 1 819 480 B1**
(45) Veröffentlichungstag und Bekanntmachung des Hinweises auf die Patenterteilung: **01.09.2010**
(21) Anmeldenummer: 05813970.0
(22) Anmeldetag: 25.11.2005
(51) Int. Cl.: B23Q 3/10, B23K 37/04

(54) **WERKSTÜCKPOSITIONIERER**
WORKPIECE POSITIONING DEVICE
DISPOSITIF DE POSITIONNEMENT DE PIECE

(30) Priorität: 03.12.2004 DE 202004018795 U
(43) Veröffentlichungstag der Anmeldung: 22.08.2007
(73) Patentinhaber: KUKA Roboter GmbH, 86165 Augsburg (DE)
(72) Erfinder: NÜCHTER, Elmar, 86167 Augsburg (DE); WIESSENSZ, Erich, 86150 Augsburg (DE); KRASS, Jürgen, 86453 Dasing (DE)
(74) Vertreter: Ernicke, Klaus Stefan
(86) Internationale Anmeldenummer: PCT/EP2005/012618
(87) Internationale Veröffentlichungsnummer: WO 2006/058663

(56) Entgegenhaltungen:
- EP-A- 0 507 033
- EP-A- 1 207 023
- DE-A1- 4 115 656
- US-A- 4 765 531

## Beschreibung

Die Erfindung betrifft einen Werkstückpositionerer mit einem Maschinengestell.

Die DE 199 02 492 A1 zeigt eine mehrachsig bewegliche und modulare Manipulationseinheit, die aus mehreren hintereinander geschalteten und miteinander verbundenen Lineareinheiten und Drehaktuatoren besteht. Am abtriebseitigen Ende der Manipulationseinheit ist ein Klemmwerkzeug angebracht.

Aus der FR 2 699 443 A1 ist ein ähnlicher mehrachsiger Manipulator in Modulbauweise mit Linear- und Dreheinheiten bekannt.

Klassische Werkstückpositionerer sind aus der Praxis bekannt. Es handelt sich z.B. um Drehpositionierer, Wendepositionierer oder dergl. Die bekannten Werkstückpositionerer haben ein steifes und üblicherweise als Schweißkonstruktion ausgeführtes Maschinengestell, an dem ein oder mehrere Werkstückaufnahmen starr oder beweglich oder ggf. mit einem zusätzlichen Antrieb angeordnet sind. Die bekannten Konstruktionen haben ein hohes Gewicht und sind bau-und kostenaufwändig.

Die DE 35 26 076 C2 und die DE 85 21 054 U1 zeigen ein Industrierobotersystem mit einem stehenden Bearbeitungsroboter und ein oder mehreren umgebenden Werkstückpositionierern. Die Werkstückpositionierer sind in konventioneller Art mit einem massiven Maschinengestell aufgebaut.

Die DE 41 15 656 A1 zeigt eine Spanneinrichtung in Form einer Schraubzwinge. Mehrere dieser Schraubzwingen können an einem Gestell montiert sein und dienen zum ortsfesten Spannen von Werkstücken. Die Schraubzwingen weisen einen Griff mit einem Schraubgewinde und einem Druckstempel auf, mit dem zwei zunächst lose Werkstückteile gegen einen gegenüber liegenden ortsfesten Anschlag gepresst und erst in der Endlage fixiert werden.

Es ist Aufgabe der vorliegenden Erfindung, einen verbesserten Werkstückpositionerer aufzuzeigen.

Die Erfindung löst diese Aufgabe mit den Merkmalen im Hauptanspruch.
Das modulare Maschinengestell hat den Vorteil, dass der Werkstückpositionerer nach einem Baukastensystem aufgebaut und an unterschiedlichste Bedarfsfälle angepasst werden kann. Durch die Modulbauweise kann der Werkstückpositionerer bei Bedarf auch umgerüstet und in seinen Abmessungen verändert werden. Die modulare Gestaltung erlaubt es, unterschiedlichste Arten von Werkstückpositionerern mit unterschiedlichen Positionierachsen-Konfigurationen aus einer Vielzahl gleichartiger Modulelemente, insbesondere Tragelementen und Verbindungselementen, aufzubauen. Dies verringert erheblich die Kosten des Maschinengestells und des kompletten Werkstückpositionerers.

Die Größenabmessungen des Maschinengestells können durch Wahl unterschiedlich langer Tragelemente variiert werden. Hierbei sind auch nachträgliche Änderungen durch Austausch oder auch Kürzung der Tragelemente möglich. Unterschiedlichen Gewichtserfordernissen kann durch verstärkte Gestellmodule Rechnung getragen werden, die jeweils Mehrfachanordnungen von Tragelementen und verbindungselementen aufweisen. Auch hier sind nachträgliche Änderungen und Anpassungen möglich. Bei einem Werkstückwechsel lassen sich vorhandene Geräte auch durch Umrüstung weiter benützen.

Die Verbindungselemente sind vorzugsweise als längsgeteilte Klemmhülsen ausgebildet. Die Klemmverbindung hat den Vorteil, dass der Gestellaufbau bzw. die Montage als kalter Prozess erfolgen können, wobei Verzüge vermieden werden, wie sie bei den bisherigen schweißkonstruktionen üblich sind. Die Klemmverbindungen erlauben außerdem ein nachträgliches Verändern des Maschinengestells. Die vorzugsweise als T-Verbinder gestalteten Klemmhülsen haben hierbei den Vorteil, dass sie einerseits zur Querverbindung von Tragelementen geeignet sind und andererseits auch die Verbindungsstelle zu den Werkstückaufnahmen und ggf. auch zu anderen Maschinengestellteilen, z.B. Bodenplatten, Stützfüßen oder dergl. herstellen können.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: ein Gestellmodul mit Klemmhülse und Tragelement in Seitenansicht,
- Figur 2:: eine perspektivische Darstellung der unteren Klemmschale der Klemmhülse,
- Figur 3-5:: einen modularen Gestellfuß in abgebrochener Darstellung und in drei geklappten Ansichten,
- Figur 6-7:: ein modulares Maschinengestell eines Werkstückpositionerers in Draufsicht und geklappter Seitenansicht,
- Figur 8-9:: eine Maschinengestellvariante in Draufsicht und geklappter Seitenansicht,
- Figur 10:: eine weitere Variante eine modularen Maschinengestells in Draufsicht,
- Figur 11-14:: verschiedene modulare Werkstückpositionerer in verschiedenen Ansichten,
- Figur 15-25:: verschiedene Schemadarstellungen von Kinematik- und Bauvarianten von Werkstückpositionerern,
- Figur 26-31:: drei Bauvarianten von Klemmhülsen in perspektivischen Ansichten
- Figur 32:: einen Werkstückpositionerer in Explosionsdarstellung und
- Figur 33-34:: zwei Bauvarianten eines Werkstückpositionerers in perspektivischen Ansichten.

Die Erfindung betrifft Werkstückpositionerer (1) mit ein oder mehreren vorzugsweise rotatorischen, vorzugsweise angetriebenen Positionierachsen (35 bis 39) zur bedarfsgerechten Positionierung von ein oder mehreren Werkstücken (2). Die Positionierachsen (35 bis 39) können alternativ translatorische oder kombinierte rotatorische/translatorische Achsen sein.

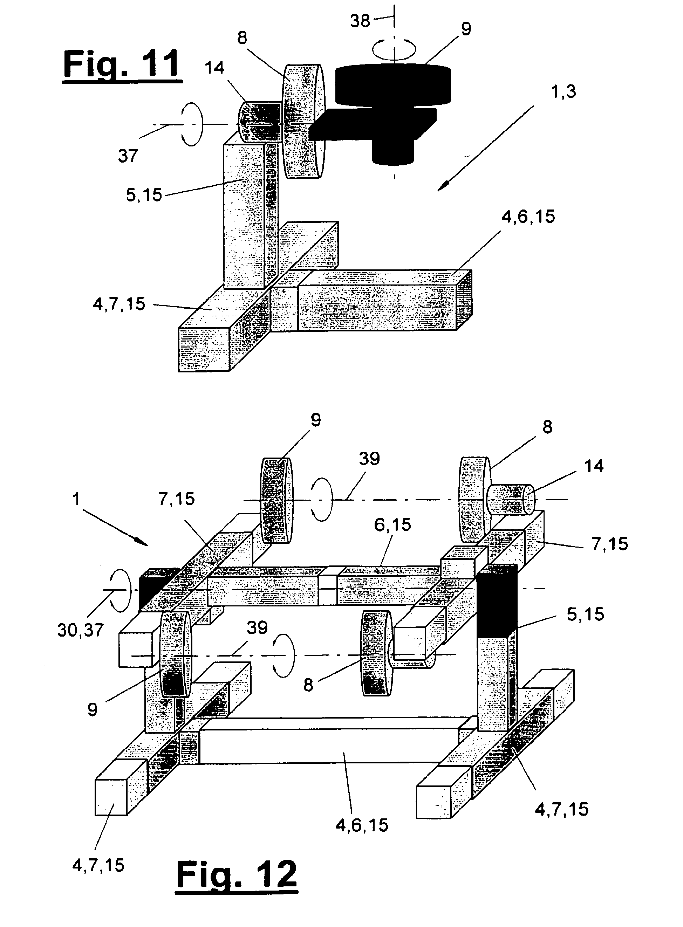

Derartige Werkstückpositionerer (1) können z.B. gemäß der Schemadarstellungen von Figur 11 bis 25 und 32 bis 34 Wendepositionierer, Drehpositionierer, Dreh-Wendepositionierer oder Kipppostionierer oder dgl. für ein oder mehrere Werkstücke (2) sein. Mit den Werkstückpositionerern (1) lassen sich die Werkstücke (2) über die Positionierachse(n) (35 bis 39) in eine bearbeitungsgerechte Position bringen und ggf. auch während des Bearbeitungsprozesses bewegen. Zum Beispiel können beim Schmelzschweißen die Werkstücke durch den Werkstückpositionerer (1) so in Abstimmung mit dem Schweißprozess geführt und bewegt werden, dass sich an der Schweißstelle stets eine Wannenlage ergibt, die ein unerwünschtes Abfließen der Schmelze verhindert. Der Werkstückpositionerer (1) kann z.B. mit der Steuerung eines Bearbeitungsroboters (nicht dargestellt) als externe Roboterachse verbunden sein.

Der Werkstückpositionerer (1) besitzt ein starres oder ggf. ein- oder mehrachsig bewegliches Maschinengestell (3), an dem ein oder mehrere Werkstückaufnahmen (8,9) für Werkstücke (2) starr oder beweglich angeordnet sind. Durch die Beweglichkeiten von Maschinengestell (3) und/oder Werkstückaufnahme(n) (8,9) ergeben sich die Positionierachse(n) (35 bis 39).

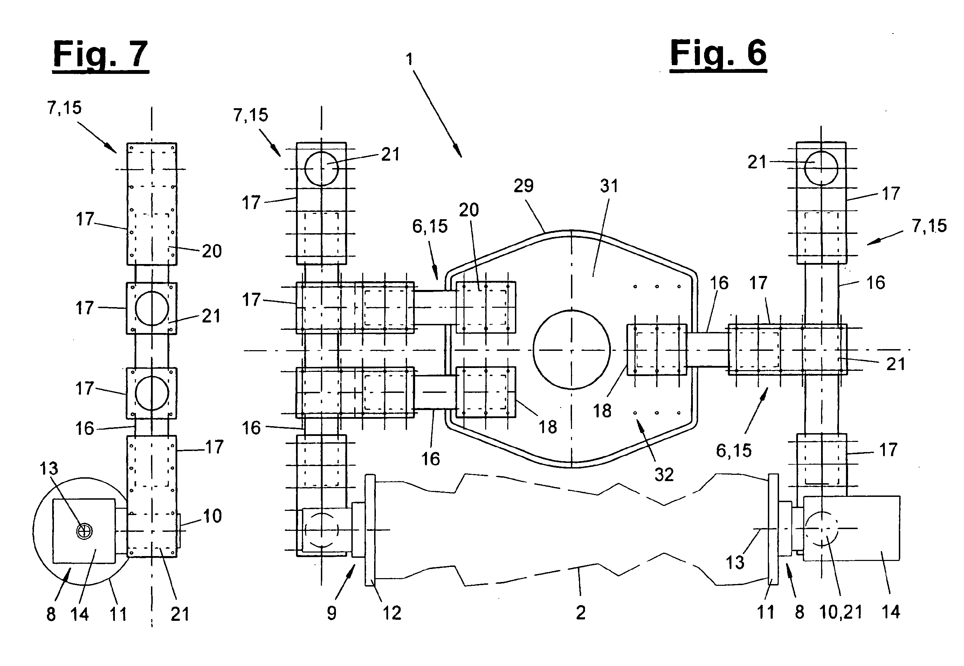

Das Maschinengestell (3) ist in den verschiedenen Ausführungsformen jeweils modular ausgebildet und besteht aus ein oder mehreren Gestellteilen (4,5,6,7). Zumindest einige der Gestellteile (4,5,6,7) sind ihrerseits modular aufgebaut und weisen ein oder mehrere Gestellmodule (15) auf. Das Maschinengestell (3) kann außer den modularen Gestellteilen (4,5,6,7) auch andere konventionelle Gestellteile aufweisen, z.B. einen Stützfuß (29), eine Bodenplatte (33) oder dergl.. Figur 6 bis 10 und 32 bis 34 zeigen derartige Varianten.

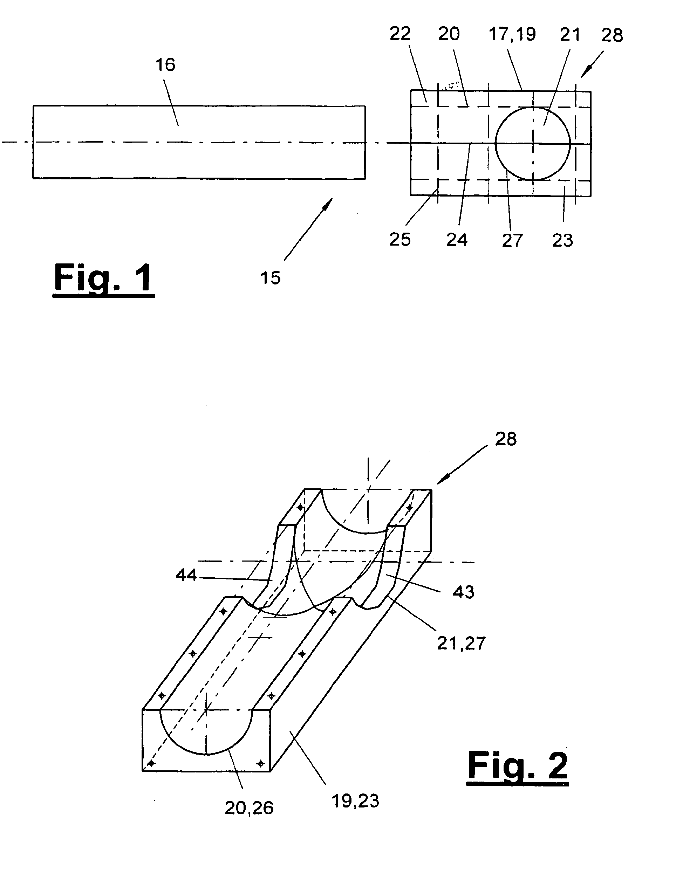

Ein Gestellmodul (15) besteht aus mehreren aufeinander abgestimmten Modulelementen (16,17,18). Ein Gestellmodul (15) weist dabei mindestens ein längliches Tragelement (16) und mindestens ein Verbindungselement (17,18) auf. Bei den in Figur 1 bis 10 und 32 bis 34 gezeigten Ausführungsformen sind jeweils einem länglichen Tragelement (16) mindestens zwei Verbindungselemente (17,18) zugeordnet und befinden sich vorzugsweise zumindest an dessen Enden. Über die Verbindungselemente (17) können Querverbindungen zu anderen Gestellmodulen (15) geschaffen werden. Die Verbindungselemente (18') stellen Antriebskonsolen für die Werkstückaufnahme(n) (8,9) dar.

Das längliche Tragelement (16) ist z.B. als Stange oder als Rohr ausgebildet. Es besitzt vorzugsweise eine gerade Form und kann alternativ gebogen sein. Das Tragelement (16) kann eine beliebige Querschnittsform haben, die z.B. prismatisch oder gerundet ist. Vorzugsweise handelt es sich um zylindrisches Rohr mit kreisrundem Querschnitt. Die Länge der Tragelemente (16) kann bedarfsweise variieren.

Das einzelne Verbindungselement (17,18,18') ist z.B. als Klemmhülse (19) ausgebildet, die sich lösbar mit ein oder mehreren Tragelementen (16) verbinden lässt. In der einen Version ist das Verbindungselement (17) als T-Verbinder ausgeführt und erlaubt Querverbindungen von Tragelementen (16). Es kann auch zur Aufnahme der Lagerung oder Achse (13) einer Werkstückaufnahme (8,9) dienen. Das andere Verbindungselement (18) stellt eine verkürzte Version der vorgenannten Ausführungsform dar und bietet nur eine Längsverbindung. Das Verbindungselement (18') dient in der Funktion als Antriebskonsole zur Aufnahme eines Antriebs (14) für eine Werkstückaufnahme (8,9). Daneben sind beliebige andere Verbinderformen, z.B. Kreuzverbinder, möglich. Sie müssen auch nicht als Klemmhülse ausgebildet sein, sondern können Steckrohre oder dgl. andere Konstruktionen sein.

Die Klemmhülse (19) besitzt in den beiden gezeigten Varianten mindestens einen Längskanal (20) zur Aufnahme eines Tragelements (16). In der bevorzugten Ausführungsform hat die Längshülse (19) nur einen Längskanal (20). In Variation dazu sind Mehrfachanordnungen möglich.'In der Variante der T-Verbinders (17) besitzt die Klemmhülse mindestens einen Längskanal (20) und mindestens einen Querkanal (21) zur Aufnahme von mehreren Tragelementen (16). Der Querkanal (21) ist hierbei in Längsrichtung gesehen außermittig angeordnet und befindet sich an einem Hülsenende (28). Die Zentralachsen des Längskanals (20) und des Querkanals (21) schneiden einander rechtwinklig. Die außermittige und endseitige Anordnung des Querkanals (21) bietet eine ausreichende Einstecktiefe und Führungslänge für das im Längskanal (20) aufgenommene Tragelement (16). Alternativ ist eine mittige Anordnung des Querkanals (21) möglich.

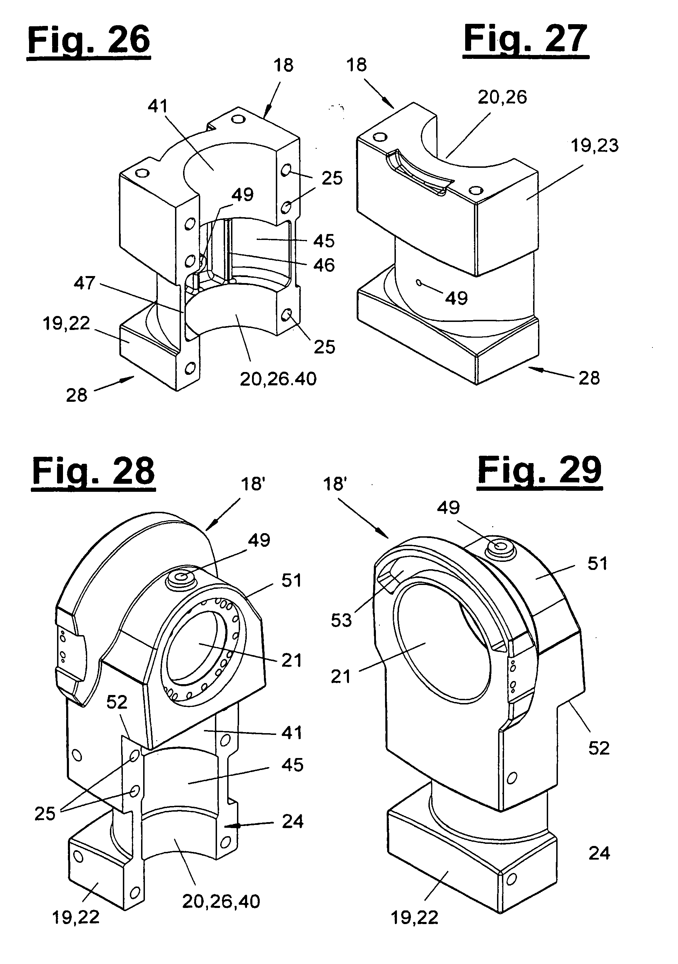

Die Klemmhülse (19) lässt sich öffnen. Sie ist zu diesem Zweck geteilt ausgebildet und vorzugsweise mittig und in der Länge geteilt. Hierbei entstehen zwei in der Formgebung gleichartige schalenförmige Klemmteile (22,23). Eines davon ist in Figur 2 perspektivisch dargestellt. Figur 26 bis 31 zeigen andere Bauvarianten. Zur Bildung der Längs- und Querkanäle (20,21) enthalten die Klemmschalen (22,23) Längs- und Querrinnen (26,27). Die Kanäle (20,21) und die Rinnen (26,27) sind in ihrer Formgebung an die Außenkontur der Tragelemente (16) angepasst und liegen dort vorzugsweise dicht an Pass- oder Ringflächen an. Im Kreuzungsbereich der Kanäle (20,21) sind bei runden Außenkonturen der Tragelemente (16) Unterbrechungen des Anlage- und Kontaktbereichs vorhanden.

Die Klemmschalen (22,23) werden an der Trennstelle (24) mittels Spannverbindern (25) lösbar und im Klemmschluss mit dem umschlossenen Tragelement (16) quer zur Trennstelle bzw. zum Trennschlitz (24) miteinander verbunden. Die Spannverbinder (25) sind z.B. Verschraubungen. Hierbei kann es sich um Schalenverschraubungen handeln, bei denen eine Klemmschale (22) Durchgangsbohrungen und die andere Klemmschale (23) Gewindebohrungen in den Schalenwänden beidseits der Rinnen (26,27) aufweist. Alternativ sind Durchgangsverschraubungen mit Durchgangsbohrungen an beiden Klemmschalen (22,23) vorhanden, die eine Verbindung der Klemm- oder Spannhülse (19) mit dem Untergrund oder mit anderen Teilen erlaubt.

Figur 26 bis 31 verdeutlichen den Aufbau der Verbindungselemente (17,18) und der Antriebskonsole (18') und deren Hülsengestaltung im Detail. Die Längs- und Querkanäle (20,21) bzw. die Längs- und Querrinnen (26,27) können in zwei, drei oder mehr ringförmige bzw. halbringförmige Stützflächen (40 bis 44) mit gleicher oder unterschiedlicher Breite unterteilt sein, die jeweils durch dazwischenliegende Ausnehmungen (45) voneinander getrennt sind. Die Stützflächen (40 bis 44) bilden exaktere Lagerflächen als eine durchgehende Rinne (26,27). In den Ausnehmungen (45) können längslaufende Rippen (46) zur Versteifung der in diesen Bereich auch durch außenseitige Materialminderung verdünnten Schalenwände (47) bilden. An den Stützflächen (40 bis 44) ist die Wandstärke auf die erforderlichen Stütz- und Haltekräfte dimensioniert. Hier befinden sich auch die Spannverbinder (25).

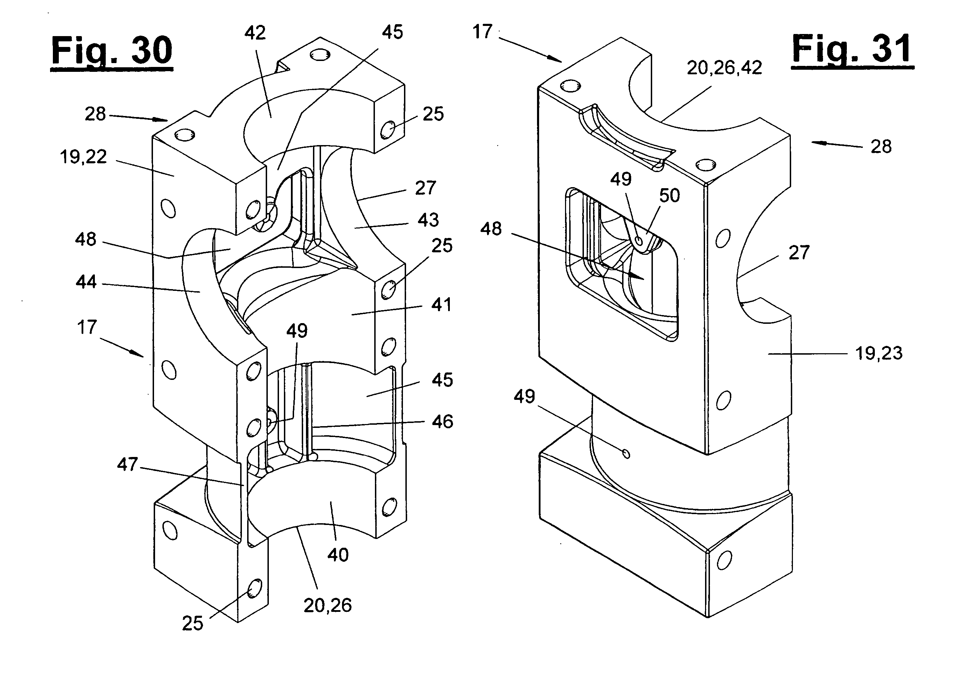

Das in Figur 26 und 27 gezeigte verkürzte Verbindungselement (18), welches eine sogenannte i-Schale darstellt, besitzt zwei Stützflächen (40,41). Der in Figur 30 und 31 dargestellte T-Verbinder (17) hat drei Stützflächen (40,41,42) im Längskanal (20) und zwei Stützflächen (43,44) im Querkanal (21). An der Kreuzungsstelle kann außerdem die außenseitige Hülsenwandung eine Durchbrechung (48) aufweisen. Hierdurch kann genauso wie mit der Ausnehmung (45) Gewicht gespart werden. Außerdem können Kabel und Leitungen in den Tragelementen (16) verlegt und an den Durchbrechung (48) nach außen geführt werden.

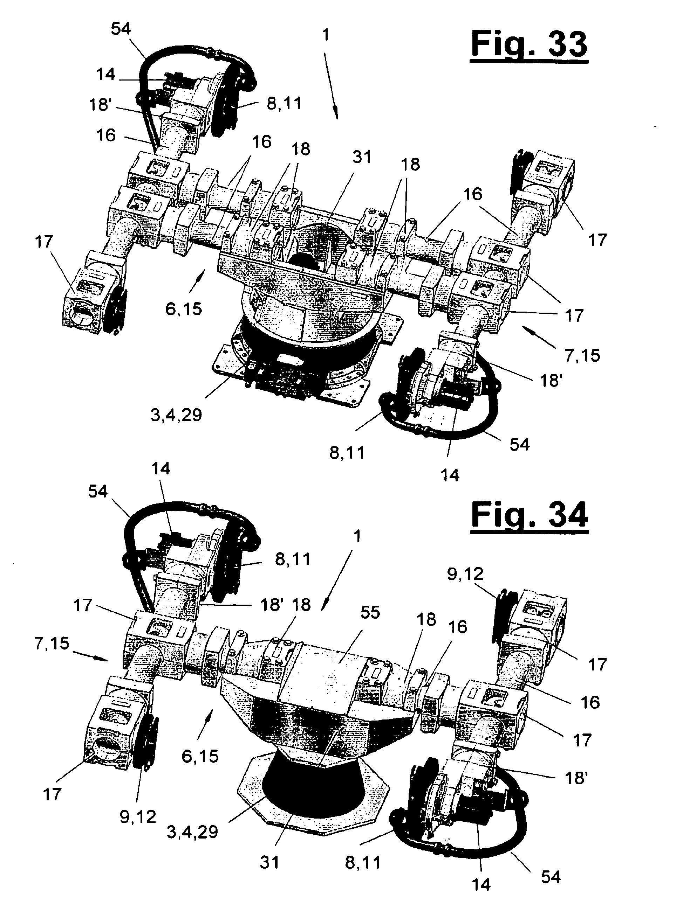

Die in Figur 28 und 29 dargestellte Antriebskonsole (18') besteht aus einem Konsolenkopf (51) mit einer anschließenden Klemmschale (22), die entsprechend der Schalenform des gekürzten Verbindungselementes (18) ausgebildet ist und die zur Bildung der geschlossenen Klemmhülse (19) auch mit einer solchen Klemmschale (23) des gekürzten Verbindungselements (18) ergänzt und verbunden wird. Der vorzugsweise einteilige Konsolenkopf (51) beinhaltet einen Querkanal (21) zur Aufnahme der Drehachse (13) und eines zugehörigen zylindrischen Beschlags oder Zapfens (10) der einen angetriebenen Werkstückaufnahme (8). An der Vorderseite des Konsolenkopfes (51) ist eine gebogene Führung (53) für einen evtl. vorhandenen Drehbegrenzer der benachbarten Werkstückaufnahme (8) vorhanden. Dies dient dem Schutz von Betriebsmittelzuführungen (54) für den Antrieb (14). Figur 33 und 34 verdeutlichen diese Anordnung. An der Rückseite des Konsolenkopfes (51) kann am Querkanal (21) der Antrieb (14) angeflanscht werden, der z.B. aus einem steuerbaren Elektromotor und einem ggf. vorgeschalteten Getriebe besteht.

Die exakte gegenseitige Positionierung der Tragelemente (16) und der Verbindungselemente (17,18) bzw. der Antriebskonsole (18') lässt sich z.B. mittels durchgesteckter Positionierstifte erreichen. Hierfür können die Klemmschalen (22,23) geeignete Aufnahmeöffnungen (49) aufweisen. Im Bereich einer Durchbrechung (48) kann außerdem eine in die Öffnung ragende Haltenase (50) mit einer solchen Aufnahmeöffnung (49) vorhanden sein. Durch die beim T-Verbinder (17) doppelten Aufnahmeöffnungen (49) lassen sich beide kreuzweise eingesteckte Tragelemente (16) positionieren.

Die in der Außenkontur z.B. im wesentlichen quaderförmige Klemmhülse (19) kann an den ebenen Seitenwänden und/oder Stirnwänden weitere Verbindungsmöglichkeiten, z.B. Schraubbohrungen, aufweisen. Die Wände können dabei Anbau-oder Verbindungsflächen bilden oder solche definierten, ggf. räumlich begrenzten Flächen beinhalten.

Die Verbindungselemente (17,18) können allesamt gleich ausgebildet sein und lassen sich an beliebigen Stellen einsetzen und verwenden. Vorzugsweise sind auch die Tragelemente (16) zumindest in ihrer Querschnittsgestaltung allesamt gleich. In der Länge können sie in der vorerwähnten Weise variieren. Ansonsten können auch unterschiedliche Verbindungselemente eingesetzt werden z.B. T-Verbinder, Kreuzverbinder, Längsverbinder oder dgl..

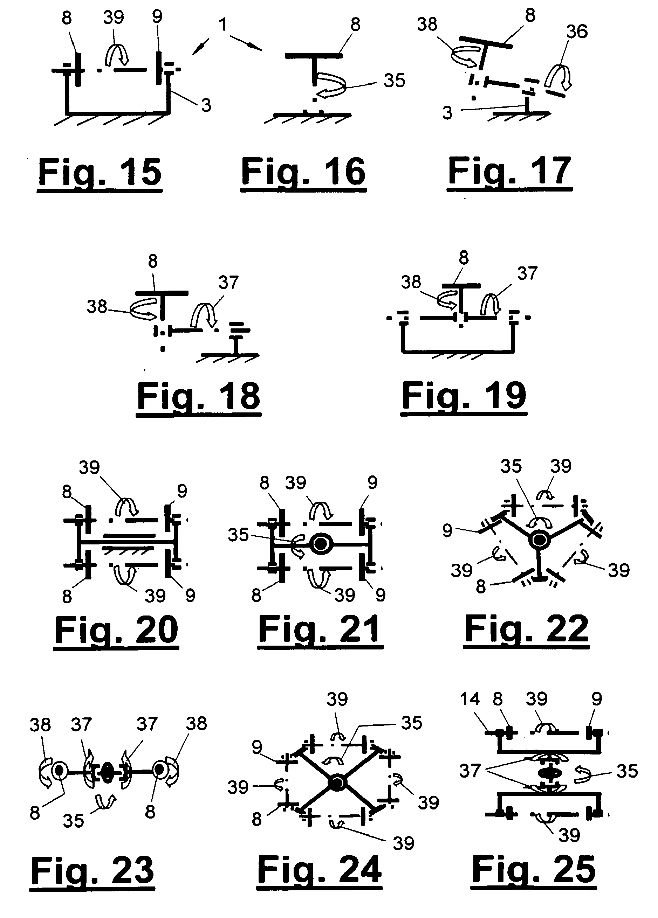

Am Maschinengestell (3) können ein oder mehrere Werkstückaufnahmen (8,9) angeordnet sein. Die Werkstückaufnahmen (8,9) können ein oder mehrere Bewegungsachsen, z.B. Drehachsen (13), zur Bildung einer Positionierachse (38,29) gemäß der Bauvarianten von Figur 15 bis 25 aufweisen. Sie können ein oder mehrere Werkstücke (2) einseitig fliegend oder beidseitig halten.

Das Maschinengestell (3) kann seinerseits ein oder mehrere bewegliche Positionierachsen (35,36,37) in Form von Dreh-, und/oder Kippachsen mit geeigneten steuerbaren Antrieben (nicht dargestellt) aufweisen. Je nach Art und Zahl der Bewegungsachsen der Werkstückaufnahmen (8,9) und des Maschinengestells (3) ergeben sich unterschiedliche Kinematiken für die Werkstücke (2). Figur 15 bis 25 zeigen hierfür verschiedene Ausführungsbeispiele.

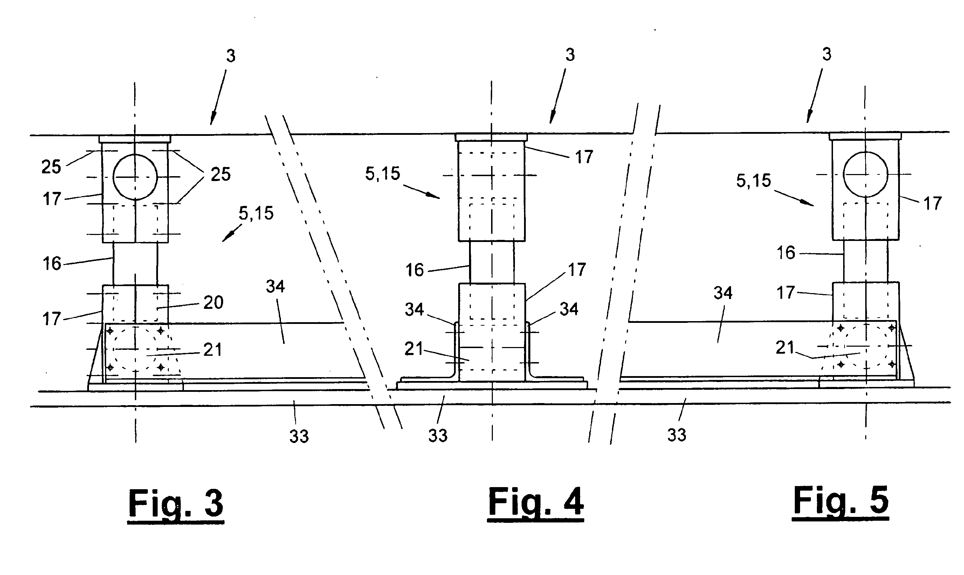

In Figur 3 bis 5 ist ein modulares Gestellteil (5) in Gestalt eines Ständers abgebrochen dargestellt. Der Ständer (5) kann mehrfach vorhanden sein und besteht jeweils aus ein oder mehreren Gestellmodulen (15). In der gezeigten Ausführungsform sind jeweils ein vertikal ausgerichtetes Tragelement (16) und zwei T-Verbinder (17) vorhanden, welche die Enden des Tragelements (16) in ihren Längskanälen (20) aufnehmen. Über die Stangenlänge wird die Ständerhöhe eingestellt. Über die Querkanäle (21) können Querverbindungen geschaffen werden, die z.B. Querarme oder Querfüße bilden. Im kurzen Reststück der Längskanäle (20) können Verschlussstopfen, Stützplatten oder dergl. mit entsprechenden Zapfen oder Vorsprüngen im Klemmschluss befestigt werden.

Die Ständer (5) können auf einer Bodenplatte (33) oder direkt auf einem anderen Untergrund in unterschiedlicher Weise befestigt werden. In der gezeigten Ausführungsform stehen die unteren T-Verbinder (17) mit ihrem Vorderende (28) stumpf auf der Bodenplatte (33). Zur Befestigung sind beidseits Fixierungen (34), z.B. Winkelleisten, vorhanden, die einerseits mit der Bodenplatte (33) und andererseits mit dem T-Verbinder (17) fest verbunden, z.B. angeschraubt sind. Die Winkelleisten (34) können zwei oder mehr Ständer (5) verbinden und einen Längsfuß bilden. An den unteren T-Verbindern (17) können ferner Einrichthilfen (nicht dargestellt) zur genauen Positionierung des Maschinengestells (3) angreifen bzw. vorhanden sein.

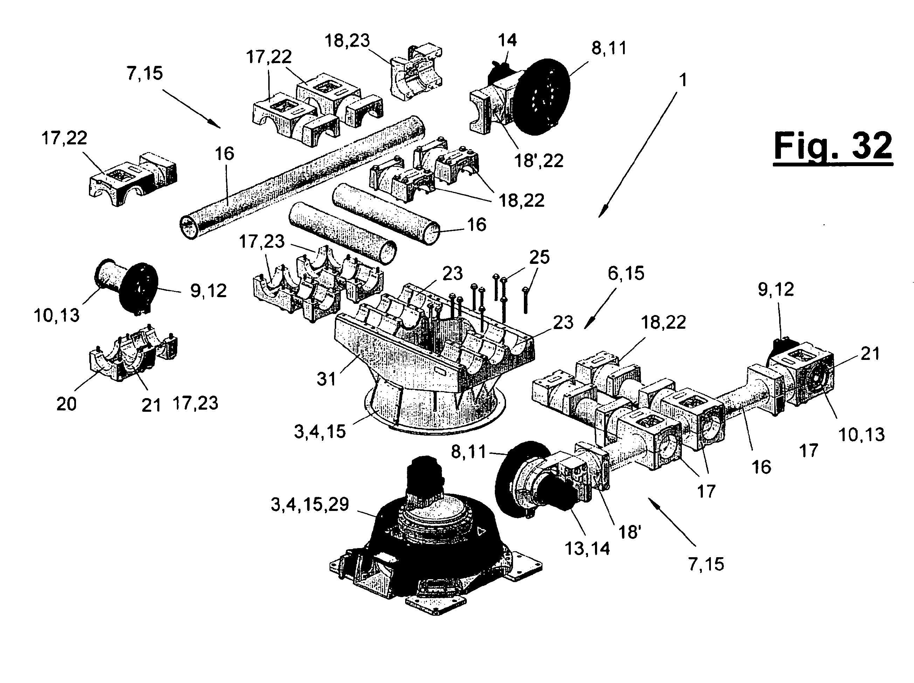

Die Figuren 6 bis 9 sowie 32 bis 34 zeigen einen Werkstückpositionerer (1), dessen Maschinengestell (3) einen z.B. aufrecht stehenden Stützfuß (29) und modulare Gestellteile (6,7) in Form von längsgerichteten und quergerichteten Gestellarmen aufweisen. Die Gestellarme (6,7) sind quer zur Stützfußachse ausgerichtet und z.B. horizontal angeordnet. In der unteren Bildhälfte von Figur 6 und 7 ist außerdem schematisch die Anordnung von Werkstückaufnahmen (8,9) und eines Werkstücks (2) am Maschinengestell (3) dargestellt. Figur 32 bis 34 zeigen ebenfalls die Werkstückaufnahmen (8,9).

Der Stützfuß (29) hat an der Oberseite einen Montagekopf (31), an dem die modularen Gestellteile (6,7), insbesondere die längsgerichteten Gestellarme (6), lösbar befestigt werden können. Dies kann mittels der ohnehin vorhandenen Spannverbinder (25) bzw. der Verschraubungen geschehen.

In der Variante von Figur 6 bis 8 ist der Montagekopf (31) als ebene Montageplatte ausgebildet, an der komplette Verbindungselemente (18) befestigt werden. Hierfür kann an der Montageplatte (31) ein Montageraster (32) aus mehreren Schraubbohrungen vorhanden sein, wobei diese Schraubbohrungen im gleichen Raster wie an den Verbindungselementen (1,18) vorhanden sind.

In der Variante von Figur 32 bis 34 besitzt der Montagekopf (31) an der Oberseite bereits eingeformte untere Klemmschalen (23), die mit oberen Klemmschalen (22) der gekürzten Verbindungselemente (18) ergänzt und durch Spannmittel (25) verbunden werden. Der Montagekopf (31) kann gemäß Figur 32 mehrere Klemmschalen (23) nebeneinander aufweisen, die je nach Bedarf gemäß Figur 33 und 34 belegt werden. Die unbelegten Klemmschalen (23) und der hohle Innenraum des Montagekopfs (31) können mit einer entsprechenden Abdeckung (55) verschlossen werden.

Figur 6 zeigt in der linken und der rechten Bildhälfte verschiedene Varianten bei der Ausbildung eines längsgerichteten Gestellarms (6). Dieser besteht in der rechten Bildhälfte aus einem einzelnen Gestellmodul (15) mit einem Tragelement (16) und zwei Verbindungselementen (17,18). In der linken Bildhälfte ist eine Doppelanordnung von zwei nebeneinander angeordneten Gestellmodulen (15) dargestellt. Diese Mehrfachanordnung bietet eine höhere Tragfähigkeit und Stabilität. Dank des Montagerasters (32) können wahlweise beide Varianten am Stützfuß (29) bzw. an der Montageplatte (31) befestigt werden. Figur 33 und 34 zeigen ebenfalls die einarmige und zweiarmige Ausführung.

Für die Verbindung der Tragelemente (16) mit dem Stützfuß (29) können die eingangs erwähnten verkürzten Verbindungselemente (18) als reine Längsverbinder oder die T-Verbinder (17) zum Einsatz kommen. Die verkürzten Verbindungselemente (18) haben nur den Längskanal (20), aber keinen Querkanal (21). Bei der horizontal und mittig geteilten Spannhülse (19) sind auf jeder Seite jeweils drei quer zur Trennstelle gerichtete Spannverbinder (25) vorhanden, die hier vorzugsweise als Durchgangsverschraubungen zur Verbindung mit dem Montageraster (32) und dessen Gewindebohrungen vorgesehen sind.

Die am anderen Stangenende befindlichen Verbindungselemente oder T-Verbinder (17) nehmen in ihren Querkanälen (21) eine durchgesteckte Stange (16) auf, an deren Enden jeweils ein T-Verbinder (17) in einer um 90° gedrehten Position angeordnet ist. Durch diese Drehung weisen deren Querkanäle (21) nach oben. Das durchgesteckte Tragelement (16) und seine Verbindungselemente (17) bilden den querlaufenden Gestellarm (7).

Der in Figur 6 und 7 sowie 32 bis 34 dargestellte Werkstückpositionerer (1) stellt einen Drehpositionierer zur Aufnahme von zwei Werkstücken (2) dar, welche jeweils um ihre Längsachse mittels der Drehachse (13) der einander gegenüber liegenden Werkstückaufnahmen (8,9) gedreht werden können. Zusätzlich können die modularen Gestellteile (6,7) ggf. noch um die Hochachse des Stützfußes (29) gedreht werden.

Wie Figur 6 in der unteren Bildhälfte und Figur 32 bis 34 verdeutlichen, besteht die eine Werkstückaufnahme (8) aus einem Aufnahmeteil (11), z.B. einer Montagescheibe, die ggf. um eine horizontale Drehachse (13) drehbar gelagert und außerdem mit dem Antrieb (14), z.B. einem steuerbaren Elektromotor (14) verbunden ist. Der Antrieb (14) kann mit der Zellensteuerung oder auch mit der Robotersteuerung eines Bearbeitungsroboters verbunden sein.

Die Werkstückaufnahme (8) besitzt z.B. einen in Figur 6 und 7 nach unten oder in Figur 32 bis 34 nach hinten ragenden Beschlag (10), z.B. einen passenden Zapfen zur formschlüssigen Führung und klemmenden Aufnahme in dem vertikal oder horizontal ausgerichteten Querkanal (21) des zugehörigen T-Verbinders (17) oder der Antriebskonsole (18'). Alternativ kann die Werkstückaufnahme (8) an der Seitenwand der Klemmhülse (19) direkt oder über einen Zwischenplatte befestigt, z.B. geschraubt werden. Die fluchtend gegenüberliegende Werkstückaufnahme (9) besitzt ebenfalls ein Aufnahmeteil (12) und kommt mit einer frei drehbaren Lagerung aus, die ebenfalls über einen Beschlag oder Zapfen im Querkanal (21) des zugehörigen T-Verbinders (17) aufgenommen ist. Das Werkstück (2) kann an den Aufnahmeteilen (11,12) in beliebig geeigneter Weise direkt oder mittelbar über einen Werkstückträger oder dergl. lösbar befestigt werden.

Die beiden Querarme (7) reichen über den Stützfuß (29) beidseits hinaus und tragen an ihren freien Enden jeweils eine Werkstückaufnahme (8,9) der vorbeschriebenen Art.

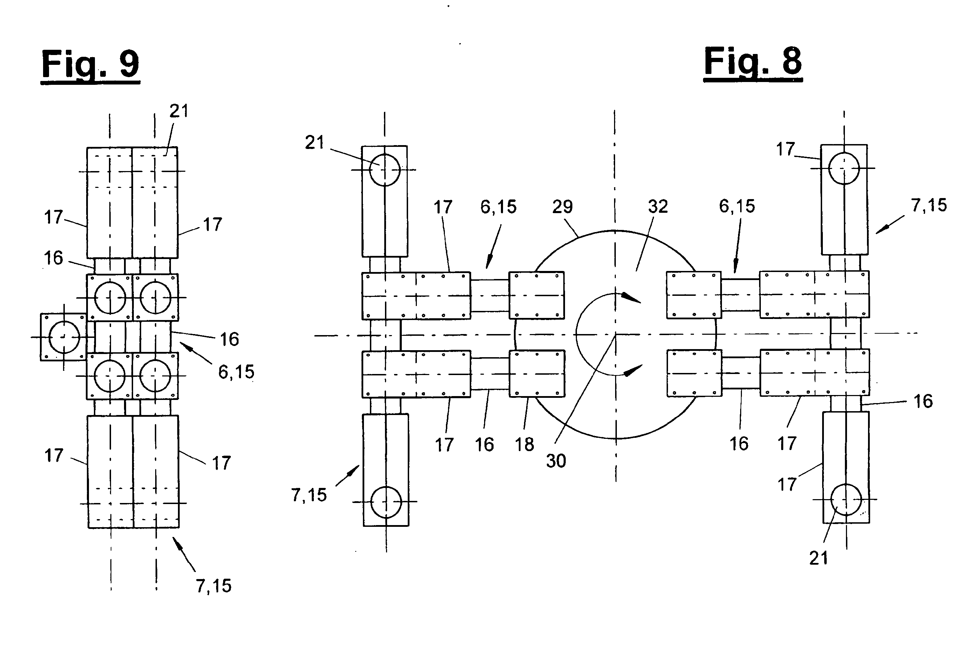

Figur 8 und 9 zeigen eine Variante des vorbeschriebenen Werkstückpositionerers (1), welche für höhere Traglasten und Werkstückgewichte ausgelegt ist. Die Längsarme (6) bestehen jeweils aus Mehrfachanordnungen, z.B. den gezeigten Vierfachanordnungen, von Gestellmodulen, die z.B. paarweise nebeneinander und übereinander angeordnet sind. Figur 9 zeigt außerdem die Variante, dass noch ein fünftes Gestellmodul (15) oben aufgesetzt sein kann. Ferner sind beliebige andere Arm- oder Modulkombinationen möglich. Auch die Querarme (7) sind durch Mehrfachanordnungen, z.B. Doppelanordnungen, von Gestellmodulen (15) verstärkt. In dem hier gezeigten Ausführungsbeispiel ist außerdem der Stützfuß (29) mit einer Drehachse (30) versehen.

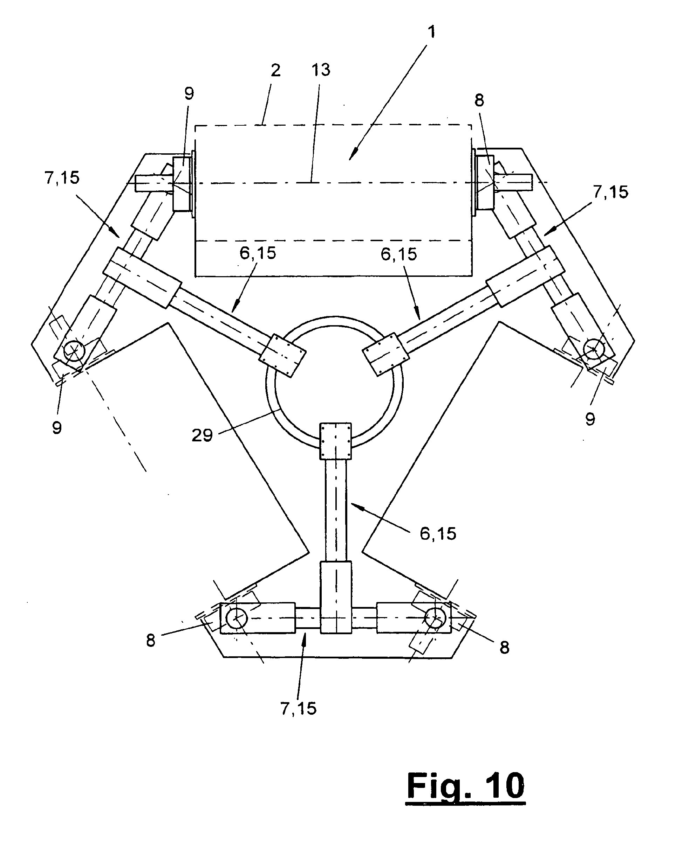

Figur 10 zeigt eine Variante eines Werkstückpositionerers (1) zur Aufnahme von drei Werkstücken. In diesem Fall sind an einem Stützfuß (29) mit Bodenplatte (33) drei gleichmäßig im Umfang verteilt angeordnete modulare Längsarme (6) angeordnet. Sie tragen an ihren freien Enden jeweils einen modularen Querarm (7). Die an dessen Armenden befindlichen Werkstückaufnahmen (8,9) wirken mit Gegenaufnahmen an einem anderen Querarm (7) zusammen. Auch hier können die schematisch angedeuteten Werkstücke (2) um die Drehachse (13) der Werkstückaufnahmen (8,9) gedreht werden. Der Stützfuß (29) kann ggf. eine vertikale Drehachse aufweisen. Die Gestellmodule (15) können für höhere Traglasten in Mehrfachanordnungen vorhanden sein.

Figur 11 bis 14 zeigen verschiedene andere Modulvarianten des Werkstückpositionerers (1) und seines Maschinengestells (3).

In Figur 11 hat das Maschinengestell (3) einen abgewinkelten Gestellfuß (4), der aus T-förmig angeordneten Längs- und Querarmen (6,7) der in Figur 6 bis 9 gezeigten Art bestehen kann. Am Querarm (7) kann außerdem ein Ständer (5) angeordnet sein, der entsprechend Figur 3 bis 5 ausgebildet ist. Am oberen Ständerende befindet sich eine Werkstückaufnahme (8), die ihrerseits eine zweite Werkstückaufnahme (9) trägt, auf welcher das nicht dargestellte Werkstück lösbar befestigt wird. Der hier gezeigte Werkstückpositionerer (1) stellt einen Dreh-Kipp-Positionierer mit zwei orthogonalen Positionierachsen (37,38) dar.

Figur 12 zeigt einen Werkstückpositionerer (1) in Form eines Doppel-Wende-Positionierers mit Horizontalachse (30). Hier ist das komplette Maschinengestell (3) modular aufgebaut. Der Gestellfuß (4) hat eine H-Form und besteht aus modularen Längs- und Querarmen (6,7). Durch Längenvariation der Tragelemente (16) können unterschiedliche Fußgrößen gebildet werden. An den Kreuzungsstellen sind zwei aufrechte Ständer (5) angeordnet, welche am oberen Ende eine ggf. drehbar gelagerte Anordnung von Längs- und Querarmen (6,7) entsprechend Figur 6 bis 9 mit endseitig an den Querarmen (7) angebrachten Werkstückhaltern (8,9) tragen. Der Werkstückpositionerer (1) hat drei parallele Positionierachsen (37,39).

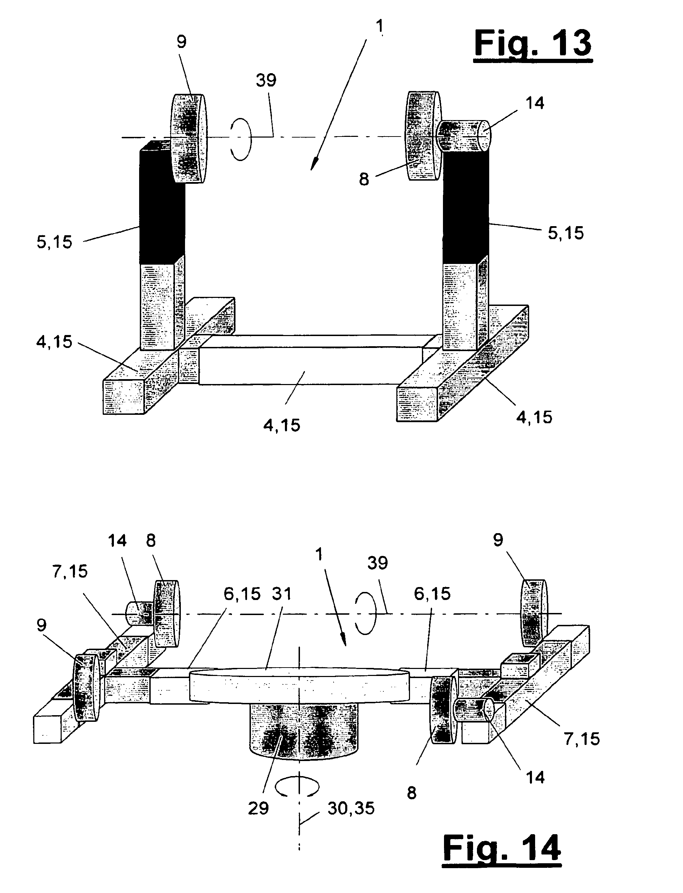

Figur 13 zeigt einen einfachen Werkstückpositionerer (1) in Form eines Wende-Positionierers mit einer Positionierachse (39). Er besitzt den vorerwähnten H-förmigen Gestellfuß (4) mit zwei aufrechten Ständern (5), die am oberen Ende jeweils eine drehbare Werkstückaufnahme (8,9) tragen.

In Figur 14 ist ein Doppel-Wende-Positionierer mit vertikaler Drehachse (30) dargestellt. Dieser entspricht den in Figur 6 bis 9 und 32 bis 34 dargestellten Ausführungsformen und hat drei Positionierachsen (35,39).

Figur 15 bis 25 zeigen verschiedene grundsätzliche Kinematikvarianten von Werkstückpositionerern (1) mit modularem Maschinengestell (3) und mit bis zu fünf Positionierachsen (35 bis 39).

In Figur 15 ist ein Wende-Positionierer entsprechend der vorbeschriebenen Variante von Figur 13 angedeutet. Figur 16 zeigt einen Drehtisch mit einer Werkstückaufnahme (8) und einer einzelnen vertikalen Dreh- und Positionierachse (35). Der zweiachsige (36,38) Drehtisch in Figur 17 kann zusätzlich um einen Ausleger an einem aufrechten Ständer gekippt werden. Der andere zweiachsige (37,38) Drehtisch von Figur 18 kann um einen horizontalen Ausleger zusätzlich geschwenkt werden. Figur 19 zeigt einen zweiachsigen (37,38) Werkstückpositionerer (1) in einer Kombination eines Drehtisches mit einem Wende-Positionierer. Die Kinematik-Darstellung von Figur 20 gehört zu einem dreiachsigen (37,39) Doppel-Wende-Positionierer gemäß Figur 12 mit horizontaler Drehachse (30). Figur 21 zeigt eine dreiachsige (35,39) Abwandlung dieses Doppel-Wende-Positionierers mit vertikaler Drehachse (30) entsprechend Figur 14. In Figur 22 ist die vierachsige (35,39) Kinematik des in Figur 10 gezeigten Dreifach-Wende-Positionierers mit vertikaler Drehachse dargestellt. In Figur 23 ist ein mehrfach schwenkbarer fünfachsiger (35,37,38) Dreh- und Wendepositionierer mit zwei Drehtischen am Ende von horizontalen Schwenkarmen dargestellt, welche ihrerseits um einen zentralen vertikalen Ständer drehbar sind. In Figur 24 ist ein fünfachsiger (35,39) Vierfach-Wende-Positionierer für vier Werkstücke in kreuzweiser Anordnung dargestellt. Figur 25 zeigt einen kombinierten fünfachsigen (35,37,39) Dreh-Wende-Positionierer mit einem zentralen Ständer mit vertikaler Drehachse, an dem zwei Seitenarme um jeweils horizontale Achsen schwenkbar angeordnet sind, welche ihrerseits als Wendepositionierer ausgebildet sind.

Abwandlungen der gezeigten Ausführungsformen sind in verschiedener Weise möglich. Die betrifft die konstruktive Gestaltung der Tragelemente (16) und der Verbindungselemente (17,18), welche andere Arten von lösbaren Verbindungen mit Formschluss und/oder Kraftschluss aufweisen können. Zudem kann die Formgebung sowie die gegenseitige Anordnung der Kanäle (20,21) sich ändern. Außer den gezeigten verschiedenen Varianten sind beliebige andere Abwandlungen in den Gestellbauformen möglich.

### BEZUGSZEICHENLISTE

- 1: Werkstückpositionierer
- 2: Werkstück
- 3: Maschinengestell
- 4: Gestellteil, Gestellfuß
- 5: Gestellteil, Ständer
- 6: Gestellteil, Gestellarm längs
- 7: Gestellteil, Gestellarm quer
- 8: Werkstückaufnahme
- 9: Werkstückaufnahme
- 10: Beschlag, Zapfen
- 11: Aufnahmeteil
- 12: Aufnahmeteil
- 13: Achse, Drehachse
- 14: Antrieb
- 15: Gestellmodul
- 16: Modulelement, Tragelement, Stange, Rohr
- 17: Modulelement, Verbindungselement, T-Verbinder
- 18: Modulelement, Verbindungselement gekürzt
- 18': Modulelement, Antriebskonsole
- 19: Klemmhülse
- 20: Längskanal
- 21: Querkanal
- 22: Klemmteil, Klemmschale
- 23: Klemmteil, Klemmschale
- 24: Trennstelle
- 25: Spannverbinder, Verschraubung
- 26: Rinne, Längsrinne
- 27: Rinne, Querrinne
- 28: Hülsenende, Vorderende
- 29: Stützfuß
- 30: Drehachse
- 31: Montagekopf, Montageplatte
- 32: Montageraster
- 33: Bodenplatte
- 34: Fixierung, Winkelleiste
- 35: Positionierachse
- 36: Positionierachse
- 37: Positionierachse
- 38: Positionierachse
- 39: Positionierachse
- 40: Stützfläche in Längskanal
- 41: Stützfläche in Längskanal
- 42: Stützfläche in Längskanal
- 43: Stützfläche in Querkanal
- 44: Stützfläche in Querkanal
- 45: Ausnehmung
- 46: Rippe
- 47: Schalenwand
- 48: Durchbrechung
- 49: Aufnahmeöffnung für Passstift
- 50: Haltenase
- 51: Konsolenkopf
- 52: Stufe
- 53: Führung
- 54: Betriebsmittelzuführung
- 55: Abdeckung

## Patentansprüche

1. Werkstückpositionierer mit ein oder mehreren angetriebenen rotatorischen und/oder translatorischen Positionierachsen (35 bis 39) zur Positionierung von ein oder mehreren Werkstücken (2), wobei der Werkstückpositionierer (1) ein modular ausgebildetes Maschinengestell (3) aufweist, das aus einem oder mehreren Gestellteilen (4,5,6,7) besteht und an dem ein oder mehrere Werkstückaufnahmen (8,9) angeordnet sind, wobei die Werkstückaufnahmen (8,9) und das gehaltene Werkstück (2) durch eine Bewegung um oder entlang mindestens einer Positionierachse (35 bis 39) in eine gewünschte Position bringbar sind, wobei
- mindestens ein Gestellteil (4,5,6,7) ein oder mehrere Gestellmodule (15) aufweist,
- ein Gestellmodul (15) mindestens ein längliche Tragelement (16) und mindestens ein als Klemmhülse (19) ausgebildetes Verbindungselement (17,18,18') aufweist,
- das Verbindungselement (17,18,18') mit ein oder mehreren Tragelementen (16) lösbar verbindbar ist,
- an mindestens einem Verbindungselement (17,18,18') eine Werkstückaufnahme (8,9) angeordnet ist und
- mindestens ein Verbindungselement (18') als Antriebskonsole zur Aufnahme eines Antriebs (14) für eine Werkstückaufnahme (8,9) dient.

2. Werkstückpositionierer nach Anspruch 1, **dadurch gekennzeichnet, dass** die Verbindungselemente (17,18,18') als i-Schale, T-Verbinder oder Antriebskonsole ausgebildet sind.

3. Werkstückpositionierer nach Anspruch 1 oder 2, **dadurch gekennzeichnet, dass** das Tragelement (16) als Stange oder als Rohr ausgebildet ist.

4. Werkstückpositionierer nach Anspruch 1, 2 oder 3, **dadurch gekennzeichnet, dass** das Tragelement (16) eine zylindrische Form aufweist.

5. Werkstückpositionierer nach einem der vorhergehenden Ansprüche, **dadurch gekennzeichnet, dass** die Klemmhülse (19) mindestens einen Längskanal (20) zur Aufnahme eines Tragelements (16) aufweist.

6. Werkstückpositionierer nach Anspruch 5, **dadurch gekennzeichnet, dass** die Klemmhülse (19) mindestens einen Längskanal (20) und mindestens einen Querkanal (21) zur Aufnahme von mehreren Tragelementen (16) aufweist.

7. Werkstückpositionierer nach Anspruch 6, **dadurch gekennzeichnet, dass** die Zentralachsen des Längskanals (20) und des Querkanals (21) einander rechtwinklig schneiden.

8. Werkstückpositionierer nach einem der vorhergehenden Ansprüche, **dadurch gekennzeichnet, dass** die Klemmhülse (19) längsgeteilt ausgebildet ist.

9. Werkstückpositionierer nach einem der vorhergehenden Ansprüche, **dadurch gekennzeichnet, dass** die Klemmhülse (19) zwei schalenförmige Klemmteile (22,23) mit Spannverbindern (25) aufweist.

10. Werkstückpositionierer nach Anspruch 9, **dadurch gekennzeichnet, dass** die schalenförmigen Klemmteile (22,23) mindestens eine an die Kontur der Tragelemente (16) angepasste Rinne (26,27) aufweisen.

11. Werkstückpositionierer nach einem der vorhergehenden Ansprüche, **dadurch gekennzeichnet, dass** das Maschinengestell (3) einen starren oder drehbaren modularen Gestellfuß (4) oder Ständer (5) mit daran angeordneten längs und/oder quer gerichteten modularen Gestellarmen (6,7) aufweist.

12. Werkstückpositionierer nach einem Ansprüche 1 bis 10, **dadurch gekennzeichnet, dass** das Maschinengestell (3) einen Stützfuß (29) mit einem Montagekopf (31) zur Aufnahme von längs und/oder quer gerichteten modularen Gestellarmen (6, 7) aufweist.

13. Werkstückpositionierer nach Anspruch 11 oder 12, **dadurch gekennzeichnet, dass** an den Gestellarmen (6,7) eine oder mehrere Werkstückaufnahmen (8,9) drehbar angeordnet sind, die ein oder mehrere Werkstücke (2) einseitig fliegend oder beidseitig halten.

14. Werkstückpositionierer nach einem der vorhergehenden Ansprüche, **dadurch gekennzeichnet, dass** der Werkstückpositionerer (1) als Drehpositionierer zur Aufnahme von ein oder mehreren Werkstücken (2) ausgebildet ist, welche jeweils mittels der Drehachse (13) von einander gegenüber liegenden Werkstückaufnahmen (8,9) drehbar sind.

15. Werkstückpositionierer nach einem der vorhergehenden Ansprüche, **dadurch gekennzeichnet, dass** an einer Positionierachse (35 bis 39) ein steuerbarer Antrieb (14) angeordnet ist.

16. Werkstückpositionierer nach einem Ansprüche 6 bis 15, **dadurch gekennzeichnet, dass** die Längs- und Querkanal (20,21) oder die Längs- und Querrinnen (26,27) in zwei, drei oder mehr ringförmige oder halbringförmige Stützflächen (40 bis 44) mit gleicher oder unterschiedlicher Breite unterteilt sind, die jeweils durch dazwischen liegende Ausnehmungen (45) voneinander getrennt sind.

17. Werkstückpositionierer nach einem Ansprüche 2 bis 16, **dadurch gekennzeichnet, dass** die Antriebskonsole (18') einen Konsolenkopf (51) mit einer anschließenden Klemmschale (22) aufweist, wobei der Konsolenkopf (51) einen Querkanal (21) zur Aufnahme der Drehachse (13) und eines zugehörigen zylindrischen Beschlags oder Zapfens (10) einer angetriebenen Werkstückaufnahme (8) aufweist.

## Claims

1. Workpiece positioning device comprising one or more driven rotational and/or translational positioning axes (35 to 39) for positioning one or more workpieces (2), wherein the workpiece positioning device (1) has a machine frame (3) of modular design which consists of one or more frame parts (4, 5, 6, 7) and on which one or more workpiece holders (8, 9) are arranged, wherein the workpiece holders (8, 9) and the held workpiece (2) can be brought into a desired position by a movement about or along at least one positioning axis (35 to 39), wherein
- at least one frame part (4, 5, 6, 7) has one or more frame modules (15),
- a frame module (15) has at least one elongated supporting element (16) and at least one connecting element (17, 18, 18') designed as a clamping sleeve (19),
- the connecting element (17, 18, 18') can be detachably connected to one or more supporting elements (16),
- a workpiece holder (8, 9) is arranged on at least one connecting element (17, 18, 18'), and
- at least one connecting element (18') serves as a drive bracket for accommodating a drive (14) for a workpiece holder (8, 9).

2. Workpiece positioning device according to Claim 1, **characterized in that** the connecting elements (17, 18, 18') are designed as an I shell, T connector or drive bracket.

3. Workpiece positioning device according to Claim 1 or 2, **characterized in that** the supporting element (16) is designed as a bar or as a tube.

4. Workpiece positioning device according to Claim 1, 2 or 3, **characterized in that** the supporting element (16) has a cylindrical shape.

5. Workpiece positioning device according to one of the preceding claims, **characterized in that** the clamping sleeve (19) has at least one longitudinal channel (20) for accommodating a supporting element (16).

6. Workpiece positioning device according to Claim 5, **characterized in that** the clamping sleeve (19) has at least one longitudinal channel (20) and at least one transverse channel (21) for accommodating a plurality of supporting elements (16).

7. Workpiece positioning device according to Claim 6, **characterized in that** the central axes of the longitudinal channel (20) and of the transverse channel (21) intersect one another at right angles.

8. Workpiece positioning device according to one of the preceding claims, **characterized in that** the clamping sleeve (19) is of longitudinally split design.

9. Workpiece positioning device according to one of the preceding claims, **characterized in that** the clamping sleeve (19) has two shell-shaped clamping parts (22, 23) with clamping connectors (25).

10. Workpiece positioning device according to Claim 9, **characterized in that** the shell-shaped clamping parts (22, 23) have at least one groove (26, 27) adapted to the contour of the supporting elements (16).

11. Workpiece positioning device according to one of the preceding claims, **characterized in that** the machine frame (3) has a rigid or rotatable modular frame foot (4) or column (5) having modular frame arms (6, 7) arranged thereon and directed longitudinally and/or transversely.

12. Workpiece positioning device according to one of Claims 1 to 10, **characterized in that** the machine frame (3) has a supporting foot (29) having a mounting head (31) for accommodating modular frame arms (6, 7) directed longitudinally and/or transversely.

13. Workpiece positioning device according to Claim 11 or 12, **characterized in that** one or more workpiece holders (8, 9) are rotatably arranged on the frame arms (6, 7), said workpiece holders (8, 9) holding one or more workpieces (2) on one side in an overhung manner or on both sides.

14. Workpiece positioning device according to one of the preceding claims, **characterized in that** the workpiece positioning device (1) is designed as a rotary positioning device for accommodating one or more workpieces (2), which can each be rotated by means of the rotary spindle (13) of workpiece holders (8, 9) situated opposite one another.

15. Workpiece positioning device according to one of the preceding claims, **characterized in that** a controllable drive (14) is arranged on a positioning axis (35 to 39).

16. Workpiece positioning device according to one of Claims 6 to 15, **characterized in that** the longitudinal and transverse channels (20, 21) or the longitudinal and transverse grooves (26, 27) are divided into two, three or more annular or semi-annular supporting surfaces (40 to 44) which have the same width or different widths and which are in each case separated from one another by recesses (45) lying in between.

17. Workpiece positioning device according to one of Claims 2 to 16, **characterized in that** the drive bracket (18') has a bracket head (51) with an adjoining clamping shell (22), wherein the bracket head (51) has a transverse channel (21) for accommodating the rotary spindle (13) and an associated cylindrical fitting or journal (10) of a driven workpiece holder (8).

## Revendications

1. Dispositif de positionnement de pièce avec un ou plusieurs axes de positionnement (35 à 39) entraînés en rotation et/ou en translation pour le positionnement d'une ou de plusieurs pièces usinées (2), le dispositif de positionnement de pièce (1) comportant un châssis de machine (3) réalisé de façon modulaire composé d'une ou de plusieurs parties de châssis (4, 5, 6, 7) et au niveau duquel un ou des logements de pièce usinée (8, 9) sont disposés, les logements de pièce usinée (8, 9) et la pièce usinée (2) maintenue pouvant être amenés dans une position souhaitée par un mouvement réalisé autour ou le long d'au moins un axe de positionnement (35 à 39), sachant que :
- au moins une partie de châssis (4, 5, 6, 7) comporte un ou plusieurs modules de châssis (15) ;
- un module de châssis (15) comporte au moins un élément porteur (16) longitudinal et au moins un élément de jonction (17, 18, 18') réalisé sous la forme d'une douille de serrage (19) ;
- l'élément de jonction (17, 18, 18') peut être relié de façon amovible à un ou plusieurs éléments porteurs (16) ;
- un logement de pièce usinée (8, 9) est disposé au niveau d'au moins un élément de jonction (17, 18, 18') ; et
- au moins un élément de jonction (18') sert de console d'entraînement pour loger un entraînement (14) prévu pour un logement de pièce usinée (8, 9).

2. Dispositif de positionnement de pièce selon la revendication 1, **caractérisé en ce que** les éléments de jonction (17, 18, 18') prennent la forme d'une coque en i, d'un connecteur en T ou d'une console d'entraînement.

3. Dispositif de positionnement de pièce selon la revendication 1 ou 2, **caractérisé en ce que** l'élément porteur (16) prend la forme d'une tige ou d'un tube.

4. Dispositif de positionnement de pièce selon la revendication 1, 2 ou 3, **caractérisé en ce que** l'élément porteur (16) prend une forme cylindrique.

5. Dispositif de positionnement de pièce selon l'une quelconque des revendications précédentes, **caractérisé en ce que** la douille de serrage (19) comporte au moins un canal longitudinal (20) pour loger un élément porteur (16).

6. Dispositif de positionnement de pièce selon la revendication 5, **caractérisé en ce que** la douille de serrage (19) comporte au moins un canal longitudinal (20) et au moins un canal transversal (21) pour loger plusieurs éléments porteurs (16).

7. Dispositif de positionnement de pièce selon la revendication 6, **caractérisé en ce que** les axes centraux du canal longitudinal (20) et du canal transversal (21) sont perpendiculaires l'un par rapport à l'autre.

8. Dispositif de positionnement de pièce selon l'une quelconque des revendications précédentes, **caractérisé en ce que** la douille de serrage (19) prend une forme séparée dans le sens de la longueur.

9. Dispositif de positionnement de pièce selon l'une quelconque des revendications précédentes, **caractérisé en ce que** la douille de serrage (19) comporte deux pièces de serrage (22, 23) en forme de coque dotées de connecteurs tenseurs (25).

10. Dispositif de positionnement de pièce selon la revendication 9, **caractérisé en ce que** les pièces de serrage (22, 23) en forme de coque comportent au moins une rainure (26, 27) adaptée au contour des éléments porteurs (16).

11. Dispositif de positionnement de pièce selon l'une quelconque des revendications précédentes, **caractérisé en ce que** le châssis de machine (3) comporte un pied de châssis (4) ou support (5) modulaire rigide ou tournant avec des bras de châssis (6, 7) modulaires orientés longitudinalement et/ou transversalement.

12. Dispositif de positionnement de pièce selon l'une quelconque des revendications 1 à 10, **caractérisé en ce que** le châssis de machine (3) comporte un pied d'appui (29) avec une tête de montage (31) pour loger les bras de châssis (6, 7) modulaires orientés longitudinalement et/ou transversalement.

13. Dispositif de positionnement de pièce selon la revendication 11 ou 12, **caractérisé en ce que** un ou plusieurs logements de pièce usinée (8, 9) sont disposés de façon tournante au niveau des bras de châssis (6, 7), lesdits logements arrêtant en vol d'un côté ou des deux une ou plusieurs pièces usinées (2).

14. Dispositif de positionnement de pièce selon l'une quelconque des revendications précédentes, **caractérisé en ce que** le dispositif de positionnement de pièce (1) prend la forme d'un dispositif de positionnement tournant pour loger une ou plusieurs pièces usinées (2) tournant respectivement par rapport aux logements de pièce usinée (8, 9) à l'aide de l'axe de rotation (13).

15. Dispositif de positionnement de pièce selon l'une quelconque des revendications précédentes, **caractérisé en ce qu'**un entraînement (14) commandable est disposé au niveau d'un axe de positionnement (35 à 39).

16. Dispositif de positionnement de pièce selon l'une quelconque des revendications 6 à 15, **caractérisé en ce que** les canaux longitudinaux et transversaux (20, 21) ou les rainures longitudinales et transversales (26, 27) sont divisés en deux, trois surfaces d'appui (40 à 44) ou plus de forme annulaire ou semi-annulaire avec la même largeur ou des largeurs différentes, lesdites surfaces étant respectivement séparées les unes des autres par des évidements (45) interposés.

17. Dispositif de positionnement de pièce selon l'une quelconque des revendications 2 à 16, **caractérisé en ce que** la console d'entraînement (18') comporte une tête de console (51) avec une coque de serrage (22) raccordée, la tête de console (51) comportant un canal transversal (21) pour loger l'axe de rotation (13) et une butée ou un tenon (10) cylindrique associé d'un logement de pièce usinée (8) entraîné.
